# EUROPEAN PATENT SPECIFICATION

(11) **EP 0 658 693 B1**
(45) Date of publication and mention of the grant of the patent: **11.03.1998**
(21) Application number: 94850196.0
(22) Date of filing: 02.11.1994
(51) Int. Cl.: F04D 29/12, F16J 15/34

(54) **A seal housing**
Gehäuse für Wellenabdichtung
Boîtier d'étanchéité

(30) Priority: 17.11.1993 SE 9303791
(43) Date of publication of application: 21.06.1995
(73) Proprietor: ITT FLYGT AB, S-171 25 Solna (SE)
(72) Inventor: Fondelius, Johan, S-117 29 Stockholm (SE)
(74) Representative: Larsson, Sten

(56) References cited:
- DE-A- 1 800 888
- DE-A- 3 137 692
- US-A- 5 188 509
- US-A- 5 195 867

## Description

The invention concerns a seal housing for a seal device, such as a mechanical face seal, arranged between the hydraulic part and the driving motor in a pump of the centrifugal type.

A conventional centrifugal pump comprises a driving unit, such as an electric motor and a pump housing connected via a driving shaft. In order to prevent the pumped medium from entering the electric motor via the shaft and cause damage, some sort of seal is arranged between the pump housing and the motor. A common seal is the so-called mechanical face seal which consists of a rotary and a stationary seal ring which are pressed towards each other by spring force.

A seal of this type is very effective as long as the two seal surfaces are even and undamaged. In order to secure a perfect sealing there is often used an arrangement consisting of two mechanical seals and an intermediate oil room. In this way one of the seals will always be lubricated and cooled by clean oil and the risk for damages is decreased.

The seal adjacent the pump housing, here called the lower seal, will however always be exposed to the pumped medium and damages can easily occur if the medium contains wearing particles. This is very common in mines and certain other industrial areas.

The lower seal is normally mounted in a cavity which has a cylindrical or conical form. If conical, the part with the longer diameter is heading the pump housing. This form has manufacturing reasons, but it is also based on the theory that particles that enter the cavity shall be thrown out again by centrifugal force. It turns out however, that pollutants are concentrated at the inner part of the cavity, where they may damage the seal surfaces as well as the cavity walls. This phenomenon also occurs in seal housings where the cavity has a cylinder formed shape.

The concentration of pollutants depends on the fact that rotation of the pumped medium generates secondary flows of such a nature that rotating surfaces obtain a radially outwards directed flow, while stationary surfaces obtain a radially inwards directed flow which is superposed the tangentially directed flow. Particles within the seal housing will be thrown outwards to the cylindrical or conical surface by centrifugal force, the boundary layer flow along that surface then directing particles within the seal housing towards the seal. The particles are not transported back to the pump impeller at the outlet of the seal housing as the backwards directed flow is weaker than the inwards directed flow and because of the fact that the centrifugal force again throws the particles towards the inwards directed boundary layer flow. The result is that particles that once have entered the seal housing will never leave it, but are concentrated in the inner part of the housing where they cause wear of the housing and the seal.

In order to diminish the risk for wear of the seal ring surfaces and the seal housing it has been suggested to obtain a pumping of the polluted liquid between the impeller hub and the seal cavity wall by help of cooperating helical grooves. An example is shown in DE - A - 1800 888. US Pat. No 487 2690 shows another solution with a device which intends to change the flow pattern in the seal area thereby decreasing the risk for wear.

According to the invention the problem to change the flow pattern in the seal area of a centrifugal pump is solved by help of the device stated in the claims.

The invention is disclosed below with reference to the enclosed drawings.

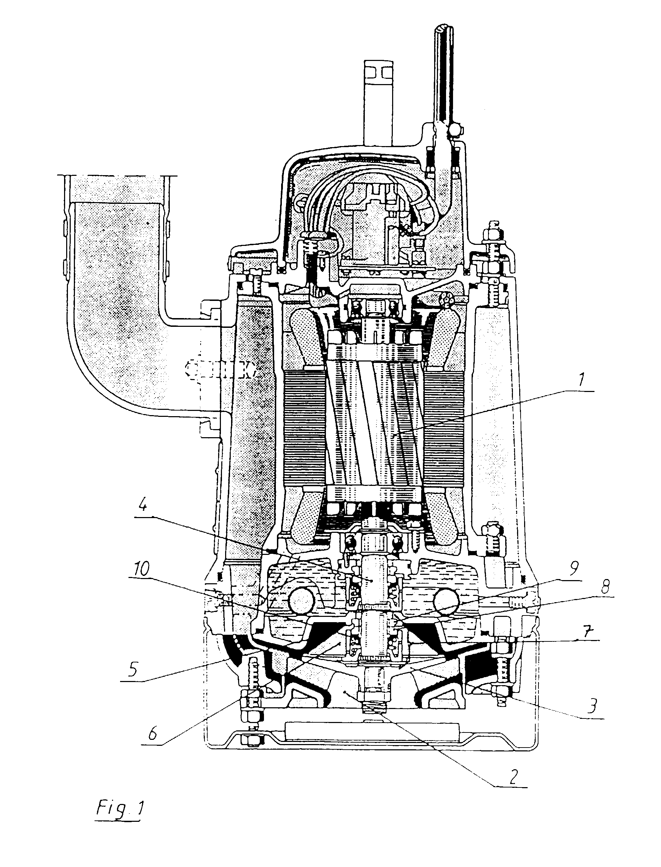

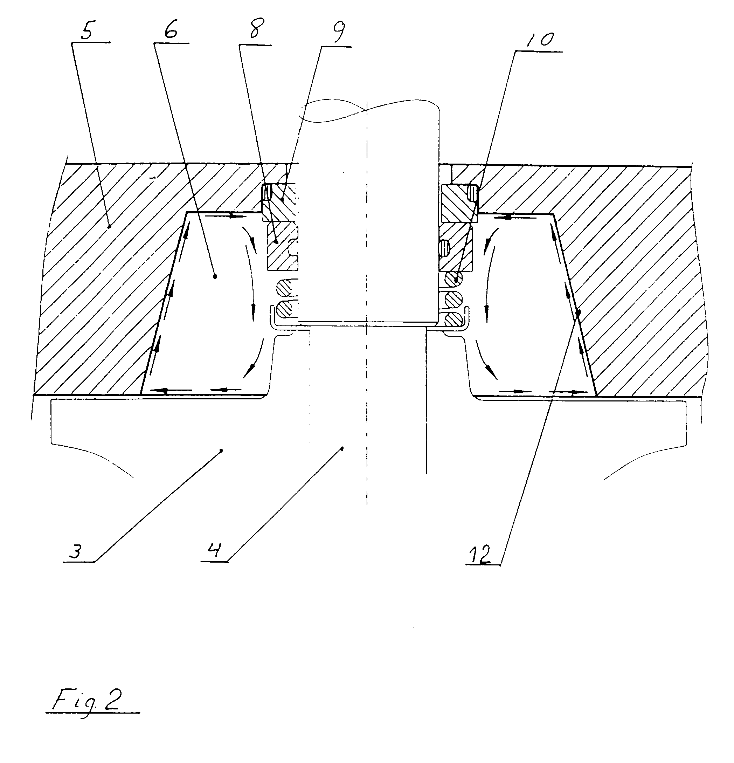

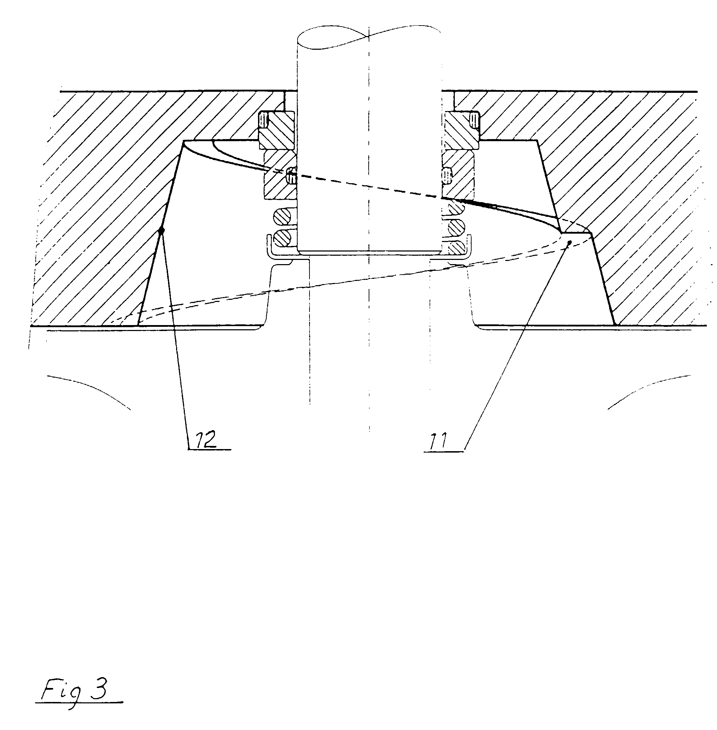

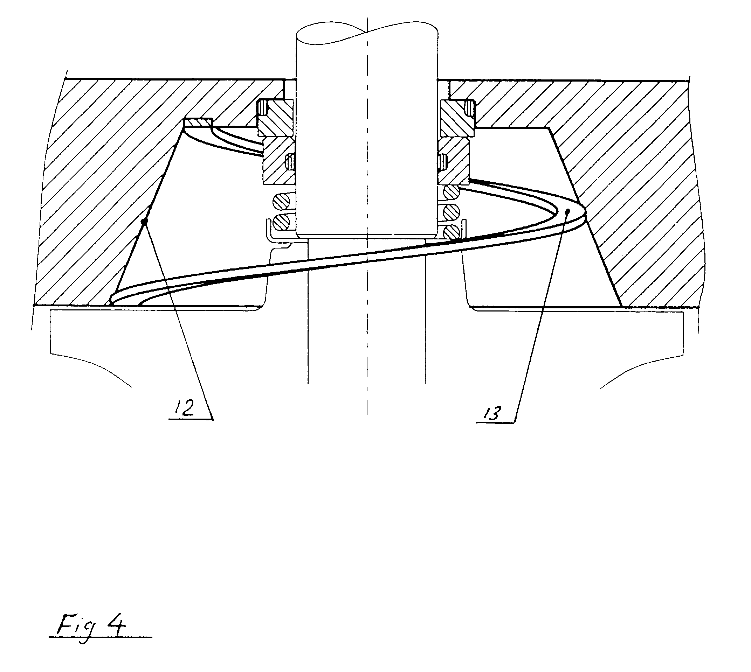

Fig 1 shows a schematic cut through a centrifugal pump, Fig 2 shows flow patterns in conventional pump housings, while Figs 3 and 4 show two different embodiments of a seal cavity according to the invention.

In the drawings 1 stands for a driving unit and 2 the hydraulic unit in a pump with a pump impeller 3 connected to the driving unit via a shaft 4, while 5 stands for an intermediate seal housing. 6 stands for a seal cavity with a mechanical face seal 7. 8 and 9 stand for a rotary and a stationary seal ring respectively, 10 spring means, 11 a notch or a shoulder on the mantle surface 12 of the cavity and 13 finally stands for an insert part.

As is shown in Fig 2 the liquid goes in loops in the seal cavity which means that wearing particles stay within the cavity. This means that there is a great risk that the damages described above will occur very quickly.

With reference to Fig 3 a device according to the invention is described. The cavity is designed with an increasing area in the direction of the pump impeller 3. The mantle surface is provided with a notch or a shoulder 11 which goes along the surface in an essentially spiral or helix pattern.

The particles that have entered the cavity 6 are transported by the boundary layer flows towards the bottom of the cavity. When the particles hit the notch or shoulder 11 they are forced by the boundary layer flows to move radially inwards to be able to pass the notch. By a suitable design of the notch said transport is prevented by centrifugal force. The particles will instead be caught by the notch and follow that in a direction out of the cavity towards the pump impeller 3, provided that the notch has an outwards feeding direction.

The notch, or the shoulder, may have various inclinations and profiles and also several notches or shoulders are possible according to the invention. According to a special embodiment shown in Fig 4, the cavity has a plane mantle surface, the notch or the shoulder being provided by a separate detail 13.

In the description the cavity is designed with an increasing area towards the pump impeller. This is to prefer for manufacturing reasons. The principle is however also valid for a cylinder formed cavity and even for a cavity having a decreasing area towards the pump impeller.

## Claims

1. A device in a seal housing of a rotary machine such as a pump or a mixer for liquids, which device comprises a driving motor (1) a hydraulic part (2) with a rotary impeller (3) or propeller connected to the motor via a shaft (4) and a seal housing (5) between the motor and the hydraulic part, said housing containing at least one seal such as a mechanical face seal, arranged within a cavity (6) in the seal housing, said cavity being open towards the pump impeller (3) and having a mantle surface (12) which is provided with at least one internal notch or shoulder (11), characterized in that said mantle surface (12) and said shaft (4) with attached seal are widely parted in the radial direction in such a way that an annular open space is created between them and that said notch or shoulder (11), which goes along a part of the circumference or makes several turns around the latter in an essentially spiral or helix pattern, has such a winding direction, that the part of the liquid present near the mantle surface (12) is fed in the direction of the pump impeller (3) by the rotary movement that the liquid obtains when the shaft (4) rotates.

2. A device according to claim 1, characterized in that the cavity (6) has an increasing area in the direction of the pump impeller (3).

3. A device according to claim 1, characterized in that the cavity (6) has an unchanged or decreasing area in the direction of the pump impeller (3)

4. A device according to claim 1, characterized in that the cavity (6) has a plane mantle surface and that the notch or shoulder (11) is formed as an insert part (13).

## Patentansprüche

1. Einrichtung in einem Dichtungsgehäuse einer Drehmaschine, beispielsweise einer Pumpe oder eines Mischers für Flüssigkeiten, umfassend einen Antriebsmotor (1), einen Hydraulikteil (2) mit einem Flügelrad (3) oder einem Propeller, der mit dem Motor über eine Welle (4) gekoppelt ist, wobei sich zwischen dem Motor und dem Hydraulikteil ein Dichtungsgehäuse (5) befindet, welches mindestens eine Dichtung, beispielsweise eine mechanische Flächendichtung, enthält, die in einem Hohlraum (6) des Dichtungsgehäuses angeordnet ist, wobei der Hohlraum zu dem Pumpenrad (3) hin offen ist und eine Mantelfläche (12) besitzt, die mit mindestens einer internen Kerbe oder Schulter (11) ausgestattet ist,
**dadurch gekennzeichnet,**
daß die Mantelfläche (12) und die Welle (4) mit der angebrachten Dichtung in radialer Richtung weit beabstandet sind, derart, daß zwischen ihnen ein offener Ringraum gebildet ist und die Kerbe oder Schulter (11), die über einen Teil des Umfangs verläuft oder mehrere Windungen um den Umfang herum in einem etwa spiralförmigen oder schraubenförmigen Muster beschreibt, eine solche Windungsrichtung besitzt, daß der in der Nähe der Mantelfläche (12) befindliche Teil der flüssigkeit von der Drehbewegung, die die Flüssigkeit bei sich drehender Welle (4) erfährt, in Richtung des Pumpenrads (3) transportiert wird.

2. Einrichtung nach Anspruch 1,
**dadurch gekennzeichnet,**
daß der Hohlraum (6) in Richtung des Pumpenrads (3) eine zunehmende Flächengröße besitzt.

3. Einrichtung nach Anspruch 1,
**dadurch gekennzeichnet,**
daß der Hohlraum (6) in Richtung des Pumpenrads (3) eine gleichbleibende oder sich verringernde Flächengröße besitzt.

4. Einrichtung nach Anspruch 1,
**dadurch gekennzeichnet,**
daß der Hohlraum (6) eine ebene Mantelfläche besitzt, und daß die Kerbe oder Schulter (11) als Einsetzteil (13) ausgebildet ist.

## Revendications

1. Dispositif contenu dans un boîtier d'étanchéité d'une machine rotative telle qu'une pompe ou un mélangeur de liquides, ce dispositif comprenant un moteur d'entraînement (1), une partie hydraulique (2) comportant une roue rotative (3) ou roue reliée au moteur par l'intermédiaire d'un arbre (4), et un boîtier d'étanchéité (5) disposé entre le moteur et la partie hydraulique, ce boîtier contenant au moins un joint d'étanchéité tel qu'un joint d'étanchéité mécanique frontal, agencé à l'intérieur d'une cavité (6) du boîtier d'étanchéité, ladite cavité étant ouverte vers la roue (3) de la pompe et présentant une surface périphérique (12) qui est pourvue d'au moins un gradin ou épaulement interne (11), caractérisé en ce que ladite surface périphérique (12) et ledit arbre (4) avec le joint d'étanchéité qui y est fixé, sont largement espacés en direction radiale de manière à créer entre eux un espace annulaire ouvert, et en ce que ledit gradin ou épaulement (11,) qui s'étend le long d'une partie de la circonférence ou forme plusieurs tours autour de la circonférence suivant une configuration essentiellement en spirale ou en hélice, possède un sens d'enroulement qui est tel que la partie du liquide présente au voisinage de la surface périphérique (12) est déplacée vers la roue (3) de la pompe par le mouvement de rotation conféré au liquide lorsque l'arbre (4) tourne.

2. Dispositif suivant la revendication 1, caractérisé en ce que la cavité (6) possède une aire croissante vers la roue (3) de la pompe.

3. Dispositif suivant la revendication 1, caractérisé en ce que la cavité (6) possède une aire constante ou décroissante vers la roue (3) de la pompe.

4. Dispositif suivant la revendication 1, caractérisé en ce que la cavité (6) comporte une surface périphérique lisse et en ce que le gradin ou épaulement (11) est réalisé sous la forme d'une pièce rapportée (13).
